# EUROPÄISCHE PATENTSCHRIFT

(11) **EP 1 573 150 B1**
(45) Veröffentlichungstag und Bekanntmachung des Hinweises auf die Patenterteilung: **23.03.2011**
(21) Anmeldenummer: 03740478.7
(22) Anmeldetag: 25.07.2003
(51) Int. Cl.: E04H 4/00, E04C 2/54

(54) **GEGENSTÄNDE AUS PMMA-FORMMASSE**
ARTICLES MADE OF PMMA MOLDING COMPOUND
ARTICLES A BASE DE MATIERE PLASTIQUE DE MOULAGE PMMA

(30) Priorität: 16.09.2002 DE 10243062
(43) Veröffentlichungstag der Anmeldung: 14.09.2005
(73) Patentinhaber: Evonik Röhm GmbH, 64293 Darmstadt (DE)
(72) Erfinder: THEIL, Alexander, 64354 Reinheim (DE); ZIETEK, Michael, 64372 Ober-Ramstadt (DE); GAUL, Heinrich, 64546 Mörfelden-Walldorf (DE); KRESS, Hans-Jürgen, 68782 Brühl (DE); HASSKERL, Thomas, 61476 Kronberg (DE); BLASS, Rudolf, 64291 Darmstadt (DE); HÖSS, Werner, 64347 Griesheim (DE)
(86) Internationale Anmeldenummer: PCT/EP2003/008211
(87) Internationale Veröffentlichungsnummer: WO 2004/033824

(56) Entgegenhaltungen:
- EP-A- 0 600 332

## Beschreibung

Die vorliegende Erfindung betrifft Polymethylmethacrylat-Formmassen, daraus herstellbare Polymethylmethacrylat-Platten zur Herstellung von Sanitärartikeln und die Sanitärartikel.

### Stand der Technik:

Polymethylmethacrylat (PMMA)-Platten zur Herstellung von Sanitärartikeln, wie beispielsweise Badewannen, Duschwannen und Himmel (Lampenabdeckungen) und Liegeflächen für Solarliegen sind an sich bekannt. Sie werden wegen der guten mechanischen und thermischen Eigenschaften sowie der guten Spannungsrissbeständigkeit und der im Sanitärbereich geforderten Heißwasserwechselbeständigkeit aus gegossenem PMMA hergestellt.

Kunststoffplatten können beispielsweise durch Polymerisation von geeigneten Monomeren, die auch vorpolymerisiert als Sirupe vorliegen können, in Kammern mit Wänden aus Glasplatten, z.B. aus Floatglas, hergestellt werden. Üblicherweise bilden die Glasplatten den Boden und die Decke der Kammern, die auf den Seiten mit geeigneten Maßnahmen, wie z.B. Kederschnüren oder Bändern, abgedichtet werden.

Die Herstellung des gegossenen Materials ist in DE 19 832 018.3 beschrieben. Die Platten werden unter der Marke PLEXIGLAS^{®} GS von der Röhm GmbH & Co. KG vertrieben.
Aufgrund seines hohen Molekulargewichts von bis zu mehreren Millionen und einer optionalen leichten Vernetzung hat gegossenes PMMA eine gute Chemikalienbeständigkeit, gute Spannungsrissbeständigkeit und Heißwasserwechseltestbeständigkeit. Die Eignung für die Anwendung im Sanitärbereich zeigt sich insbesondere durch das Verhalten im Heißwasserwechseltest, bei dem ein plattenförmiger Prüfkörper in 100°C heißes Wasser eingetaucht und nach Abkühlung des Wassers entnommen und getrocknet wird. Die Unterscheidung geeigneter und ungeeigneter Materialien kann durch die Anzahl bestandener Zyklen im Heißwasserwechseltest erfolgen.

Die für den Einsatz im Sanitärbereich erforderlichen Mindestkennwerte des Materials werden in der europäischen Norm EN 263 beschrieben.

Aus den Abbildungen 11 und 12 auf Seite 12 der Broschüre "Verarbeitungsrichtlinien umformen", Kenn-Nummer 3112, Ausgabe April 2001, veröffentlicht durch die Röhm GmbH & Co. KG im April 2001 folgt, dass die erforderliche Umformkraft pro Quadratmillimeter bei gegossenem PLEXIGLAS^{®} deutlich höher ist als die entsprechende Umformkraft pro Quadratmillimeter bei extrudiertem PLEXIGLAS^{®}. Daraus folgt, dass sich filigrane Strukturen in PLEXIGLAS^{®}GS nicht so gut ausformen lassen wie in PLEXIGLAS^{®} XT.

Es treten hohe Haltekräfte in den Maschinen auf und die erforderlichen Temperaturen beim Umformen von PLEXIGLAS^{®} GS sind sehr hoch. Dies bedingt teure, mechanisch sehr stabile Maschinen und hohen Energieeinsatz beim Aufheizen der Platten vor dem Tiefziehen. Aus wirtschaftlichen Gründen und aus Sicht der Verarbeiter ist deshalb eine leichtere thermische Umformbarkeit wünschenswert.

Die Herstellung von gegossenem PMMA ist aufwändig und kostenintensiv, da jede Platte einzeln in einer Form aus zwei Glasplatten polymerisiert werden muss. Es wurde deshalb bereits versucht, kostengünstigere und leichter umformbare Produkte für Sanitäranwendungen durch kontinuierliche Verfahren herzustellen.

Es wurde auch versucht, leichter umformbare Sanitärmaterialien als extrudierte Tafeln herzustellen. So hat man z.B. coextrudierte Platten mit einer Kunststoffbasisschicht aus einer preiswerten leichtfließenden thermoplastischen Kunststoffformmasse wie beispielsweise ABS und einer dünnen PMMA-Deckschicht hergestellt DE 44 36 381. Diese Produkte sind für den Einsatz im Sanitärbereich prinzipiell geeignet, sie haben jedoch den Nachteil, dass das PMMA mit dem thermoplastischen Kunststoff fest verbunden ist und nur noch in Form von Mahlgut für minderwertige Anwendungen rezykliert werden kann.

### Aufgabe

Die zahlreichen Versuche zur Herstellung von Sanitärmaterialien belegen den Bedarf an einem preiswerten leicht umformbaren spannungsriss - und heißwasserwechseltestbeständigen Material. Die Oberflächenqualität des Materials soll hoch sein. Kratzer und Riefen dürfen nicht auftreten. Alle bekannten Produkte haben aber einen oder mehrere Nachteile wie hohen Preis, schlechte Umformbarkeit, eingeschränkte Rezyklierfähigkeit, unruhige Oberfläche oder geringe Heißwasserwechseltestbeständigkeit.

### Lösung der Aufgabe

Uns ist es nun gelungen, ein Plattenmaterial aus massivem PMMA oder schlagzähmodifiziertem massivem PMMA für Anwendungen im Sanitärbereich, das die zuvor genannten Nachteile nicht hat, durch Extrusion einer PMMA-Formmasse herzustellen. Die Aufgabe wurde durch zur Verfügung stellen einer Formmasse und ihre Verarbeitung durch herkömmliche, an sich bekannte Extrusion zu Kunststoffformkörpern gelöst.

Das Material besteht den Heißwasserwechseltest über mindestens 20 Zyklen und kann am Ende seiner Produktnutzungsdauer leicht und vollständig zu monomerem Methylmethacrylat durch thermisches Recycling überführt und dadurch wieder für hochwertige Nutzung zugänglich gemacht werden.

### Beschreibung der Erfindung:

Das erfindungsgemäße Material hat folgende Zusammensetzung:
- 96 - 99,5 Gew.-%: Methylmethacrylat
- 0,5 - 4,0 Gew.-%: eines Esters der Acrylsäure, wie beispielsweise Methylacrylat, Ethylacrylat, Propylacrylat, Isopropylacrylat, Butylacrylat oder Isobutylacrylat.

Optional können noch bis zu 30 Masse-% an mit Methylmethacrylat copolymerisierbaren Monomeren enthalten sein, bevorzugt ist ein Gehalt von bis zu 10 Masse-%. Als mit Methylmethacrylat copolymerisierbare Monomere kommen beispielsweise Styrol und substituierte Styrole, wie Methylstyrol oder Chlorstyrol in Frage.

Höhere Ester der Acrylsäure eignen sich grundsätzlich ebenfalls zum Einsatz, allerdings werden die entstehenden Materialien dann weich.

Das mittlere Molekulargewicht der erfindungsgemäßen Formmasse liegt zwischen 140.000-180.000, bevorzugt zwischen 150.000 und 170.000 und ganz besonders bevorzugt zwischen 155.000 und 165.000 (bestimmt mittels SEC).

Die Uneinheitlichkeit wurde nach M. D. Lechner, K. Gehrke, E. H. Nordmeier: Makromolekulare Chemie, Birkhäuser Verlag, Basel, 1993, 1. Aufl., S. 7 berechnet und liegt zwischen 0,9 und 1,5.

Das erfindungsgemäße Material eignet sich durch Herstellung einer Kunststoffformmasse aus reinem oder schlagzähem PMMA zur Herstellung von Halbzeugen.
Um die gewünschten Eigenschaften zu erhalten, wird die Kunststoffformmasse so gewählt, dass der Comonomeranteil, das Molekulargewicht, die Molekulargewichtsverteilung und optional der Schlagzähmacheranteil in einem bestimmten Bereich liegen. Es wurde gefunden, dass bei erfindungsgemäßer Zusammensetzung und Extrusion nach dem Fachmann bekanntem Verfahren ein plattenförmiges Halbzeug erhalten wird, dessen thermische, mechanische und oberflächentechnische Kenngrößen im geforderten Bereich für Sanitärhalbzeuge liegen. Insbesondere liegt die Heißwasserwechselbeständigkeit des Plattenmaterials bei mindestens 20 Zyklen im Heißwasserwechseltest nach EN 263.

Die erfindungsgemäßen Kunststoffhalbzeuge können sowohl in schlagzäher als auch in nicht-schlagzäher Ausführung hergestellt werden. Die Menge des Schlagzähmodifiers wird so eingestellt, dass die Wärmeformbeständigkeit des Materials auf einem für Sanitärmaterialien geforderten ausreichend hohen Niveau bleibt.

Schlagzähmodifizierungsmittel für Polymethacrylat-Kunststoffe sind hinlänglich bekannt. Herstellung und Aufbau von schlagzähmodifizierten Polymethacrylat-Formmassen sind z. B. in EP-A 0 113 924, EP-A 0 522 351, EP-A 0 465 049 und EP-A 0 683 028 beschrieben.

### Polymethacrylat-Matrix

Die schlagzähe Formmasse besteht zu 70 - 99 Gew.-% aus einer Matrix, die zu 80 bis 100, vorzugsweise zu 90 - 98 Gew.-% und besonders bevorzugt zu 96-99,5 Gew.-%, aus radikalisch polymerisierten Methylmethacrylat-Einheiten und zu 0,5 - 20, bevorzugt zu 0,5-10 Gew.-% und ganz besonders bevorzugt zu 0,5 - 4 Gew.-% aus weiteren radikalisch polymerisierbarern Comonomeren, z. B. C1- bis C4-Alkylacrylaten, insbesondere Methylacrylat, Ethylacrylat oder Butylacrylat. Vorzugsweise liegt das mittlere Molekulargewicht Mw der Matrix im Bereich von 90.000 g/mol bis 200.000 g/mol, insbesondere 130.000 g/mol bis 190.000 g/mol oder 140.000 g/mol bis 180.000 g/mol.

### Schlagzähmodifizierungsmittel

In der Polymethacrylat-Matrix sind 1 bis 30, bevorzugt 2 bis 20, besonders bevorzugt 3 bis 15, insbesondere 5 bis 12 Gew.-% eines Schlagzähmodifizierungsmittels, das eine Elastomerphase aus vernetzten Polymerisatteilchen ist, enthalten, wobei die Mengenangabe auf die Elastomerphase bezogen ist. Das Schlagzähmodifizierungsmittel wird in an sich bekannter Weise durch Perlpolymerisation oder durch Emulsionspolymerisation erhalten.

Im einfachsten Fall handelt es sich um, mittels Perlpolymerisation erhältliche, vernetzte Teilchen mit einer mittleren Teilchengröße im Bereich von 50 bis 500 µm, bevorzugt 80 bis120 µm. Diese bestehen in der Regel aus mindestens 40, bevorzugt 50 - 70 Gew.-% Methylmethacrylat, 20 bis 40, bevorzugt 25 bis 35 Gew.-% Butylacrylat sowie 0,1 bis 2, bevorzugt 0,5 bis 1 Gew.-% eines vernetzenden Monomeren, z. B. einem mehrfunktionellen (Meth)acrylat wie z. B. Allylmethacrylat und gegebenenfalls weiteren Monomeren wie z. B. 0 bis 10, bevorzugt 0,5 bis 5 Gew.-% an C₁-C₄-Alkylmethacrylaten, wie Ethylacrylat oder Butylmethacrylat, bevorzugt Methylacrylat, oder anderen vinylisch polymerisierbaren Monomeren wie z. B. Styrol.

Bevorzugte Schlagzähmodifizierungsmittel sind Polymerisatteilchen, die einen zwei-, besonders bevorzugt einen dreischichtigen Kern-Schale-Aufbau aufweisen und durch Emulsionspolymerisation erhalten werden können (s. z. B. EP-A 0 113 924, EP-A 0 522 351, EP-A 0 465 049 und EP-A 0 683 028). Typische Teilchengrößen dieser Emulsionspolymerisate liegen im Bereich von 100 - 500 nm, bevorzugt 200 - 400 nm.

Ein dreischichtiger bzw. dreiphasiger Aufbau mit einem Kern und zwei Schalen kann wie folgt beschaffen sein. Eine innerste (harte) Schale kann z. B im wesentlichen aus Methylmethacrylat, geringen Anteilen von Comonomeren, wie z. B. Ethylacrylat und einem Vernetzeranteil, z. B. Allylmethacrylat, bestehen. Die mittlere (weiche) Schale kann z. B. aus Butylacrylat und gegebenenfalls Styrol aufgebaut sein, während die äußerste (harte) Schale im wesentlichen meist dem Matrixpolymerisat entspricht, wodurch die Verträglichkeit und gute Anbindung an die Matrix bewirkt wird. Der Polybutylacrylat-Anteil am Schlagzähmodifizierungsmittel ist entscheidend für die schlagzähe Wirkung und liegt bevorzugt im Bereich von 20 bis 40 Gew.-%, besonders bevorzugt im Bereich von 25 bis 35 Gew.-%.

### Schlagzähmodifizierte Polymethacrylat-Formmassen

Im Extruder können das Schlagzähmodifizierungsmittel und Matrix-Polymerisat zu schlagzähmodifizierten Polymethacrylat-Formmassen in der Schmelze vermischt werden. Das ausgetragene Material wird in der Regel zunächst zu Granulat geschnitten. Dieses kann mittels Extrusion oder Spritzguß zu Formkörpern, wie Platten oder Spritzgußteilen weiterverarbeitet werden.

### Kerbschlagzähigkeiten und Fließfähigkeit des Standes der Technik

Formkörper aus handelsüblichen schlagzähmodifizierte Polymethacrylat-Formmassen weisen Kerbschlagzähigkeiten KSZ nach Charpy gemäß ISO 179/1 eA im Bereich von 3,0 KJ/m² bis 5,0 KJ/m² auf.

Handelsübliche schlagzähmodifizierte Polymethacrylat-Formmassen weisen Fließfähigkeiten MVR (230 °C/3,8 kg) im Bereich von 0,4 bis 8,1 cm³/10min nach ISO 1133 auf. Die Fließfähigkeit schlagzähmodifizierter Polymethacrylat-Formmassen soll insbesondere für die Spritzgießverarbeitung möglichst hoch sein. Auf Fließfähigkeit optimierte, schlagzähmodifizierte Polymethacrylat-Formmassen erreichen MVR-Werte (230 °C/3,8 kg, ISO 1133) im Bereich von maximal ca. 10,0 cm³/10min.

Der Masse-Anteil an Schlagzähmodifier bei der erfindungsgemäßen Kunststoffformmasse beträgt 0 - 15 Masse-%, bezogen auf die Matrix aus PMMA und Comonomeren. Der Schlagzähmodifiergehalt wird als Gummiphasengehalt gemessen, wobei unter Gummiphase die Phase des Schlagzähmodifier-Teilchens verstanden wird, die elastische Eigenschaften aufweist und die beispielsweise aus Butylacrylat aufgebaut ist. Als Gummiphase des Schlagzähmodifier kann auch ein Polybutadienkautschuk eingesetzt werden.

Die Vicat-Temperatur (B 50, bestimmt nach DIN ISO 306) liegt bei der erfindungsgemäßen Formmasse bei > 105° C.

Die erfindungsgemäßen Halbzeuge können die für Sanitäranwendungen üblichen Zusätze wie Weißpigmente, Farbpigmente, Dispergierhilfsmittel, UV-und Thermo-Stabilisatoren, Weichmacher, Trenn- und Entformungsmittel und optional Antimikrobika enthalten.

Eine typische Rezeptur für eine extrudierbare Mischung beinhaltet z.B.:
0,2 % Weißpigment Titandioxid
0,006 % Farbpigmentmischung
0,05 % Stabilisator HALS und oder UV-Absorber
geringe Mengen an Gleit- und oder Trennmittel
Rest zu 100 % PMMA-Kunststoffformmasse, wie oben beschrieben.

Unter HALS versteht man Hindered Amine Light Stabilizer.

Optional können der Rezeptur noch Antimikrobika wie z.B. Triclosan, silberhaltige Präparate auf anorganischem Träger, wie silberdotiertes Zirconiumphosphat, beispielsweise Alphasan RC 2000 oder Alphasan RC 5000 von Milliken, polymere Antimikrobika wie Poly-t-butylaminoethylmethacrylat, beispielsweise Amina T 100 von Creavis GmbH oder Triazinderivate, beispielsweise Produkte der Ciba GmbH, die unter dem Namen Irgaguard vertrieben werden, zugesetzt werden. Durch die antibakterielle Ausrüstung kann die Vermehrung von Keimen auf der Oberfläche unter ungünstigen hygienischen Bedingungen verhindert werden.

Die Erfindung soll durch die folgenden Beispiele näher beschrieben werden.

Es wurden Tafeln aus PMMA-Formmassen mit sanitärüblichen Zusätzen ohne Schlagzähmodifier und mit unterschiedlichem Gehalt an Schlagzähmodifier bis maximal 13 %, bezogen auf die Gummiphase des Schlagzähmodifiers hergestellt und im Heißwasserwechseltest nach EN 263 geprüft.

Die Versuche wurden mit einer Platte (Abmessungen), hergestellt aus einer Formmasse aus 99 % Methylmethacrylat und 1 % Ethlyacrylat durchgeführt. Das mittlere Molekulargewicht liegt bei 160.000 g/mol, die Vicattemperatur der Platten beträgt 105°C und der MVR liegt bei 0,8 cm³/10 Min.

Der Restmonomergehalt der erfindungsgemäßen Formmasse (Formmasse oder Formkörper, wie z. B. Platte) liegt unter 0,35 Gew.-%, bezogen auf den Gehalt an Methacrylsäuremethylester. Der Gehalt an Methacrylsäuremethylester wurde mittels headspace-Gaschromatographie bestimmt. Bevorzugt liegt der Restmonomerengehalt der erfindungsgemäßen Formmasse bei unter 0,25 Gew.-%.
Ergebnisse des Heißwasserwechseltests nach DIN ISO 263:

| Beispiel: | Ergebnis: |
|---|---|
| erfindungsgemäßes Material | keine Rissbildung bei mehr als 20 Wechseln |
| erfindungsgemäßes Material + 4 % SZ-Modifier, best. als Gummiphase | keine Rißbildung bei mehr als 20 Wechseln |
| PLEXIGLAS^{®}7H (Vergleich) | viele feine Risse nach einem Wechsel |
| PLEXIGLAS^{®}7H, + 5 % SZ-Modifier ber. als Gummiphase (Vergleich) | 4 Wechsel (starke Rissbildung) |
| PLEXIGLAS^{®}7H, + 10 % SZ-Modifier ber. als Gummiphase (Vergleich) | 12 Wechsel (viele feine Risse) |

### Heißwasser-Isopropanol-Test

Die Probekörper wurden bei 70 °C 16 Stunden getrocknet und bis Versuchsbeginn im Exsikkator gelagert. Beginnend bei einer Temperatur von 55°C, wurden die Probekörper im Wasserbad für 10 Min. gelagert. Die Probekörper wurden herausgenommen, getrocknet und die Oberfläche der Probekörper wurde mit 1 ml Isopropanol benetzt. Der Probekörper wurde anschließend mit einer Uhrglas abgedeckt. Nach 5 Minuten wurde auf Rissbildung beurteilt. War keine Rissbildung im Probekörper zu erkennen, wurde der Zyklus mit 5° C höherer Wassertemperatur fortgesetzt.

Gemessen wird die Temperatur, bei der erstmals Risse auftreten.

| Material | Ergebnis |
|---|---|
| erfindungsgemäßes Material | 75°C |
| erfindungsgem. + 4 % Schlagzähmodifier, ber. als Gummiphase | 75°C |
| PLEXIGLAS^{®}7H (Vergleich) | 70°C |

Ein gegossenes PMMA mit einem mittleren Molekulargewicht von 2 Mio. und folgender Zusammensetzung wurde zum Vergleich geprüft. Die Heißwasserwechseltestbeständigkeit ist gut; das Material lässt sich jedoch aufgrund seines hohen Molekulargewichts schwer umformen.

### Zusammensetzung:

- 98,4: Gew.-Teile PMMA-Sirup mit 10 % Polymergehalt
- 0,2: Gew.-Teile Titandioxid
- 1,0: Gew.-Teile Farbpaste
- 0,4: Gew.-Teile Dispergieradditiv
- 0,05: Gew.-Teile HALS
- 0,01: Gew.-Teile Vernetzer Dimethacrylat
- 0,0025: Gew.-Teile Mercaptanregler

Die Versuche und Vergleichsversuche zeigen, dass nur die erfindungsgemäßen Sanitärhalbzeuge sowohl heißwasserwechseltestbeständig, leicht umformbar und wärmeformstabil sind.

## Patentansprüche

1. Heißwasserwechselbeständiges Sanitärmaterial aus einem thermoplastischen Kunststoff mit einem Gehalt an Schlagzähmodifier zwischen 1 und 15 Masse-%, bezogen auf die Gummiphase des Schlagzähmodifiers,
**dadurch gekennzeichnet,**
**dass** zur Herstellung des Sanitärmaterials eine PMMA-Formmasse aus Methylmethacrylat mit einer Zusammensetzung von bis zu 4 Gew.-% vinylische Comonomere und einem mittleren Molekulargewicht Mw von 130.000 bis 190.000 g/mol eingesetzt wird und dass die Formmasse durch Extrusion zu einem plattenförmigen Halbzeug verarbeitet wird.

2. Heißwasserwechselbeständiges Sanitärmaterial nach Anspruch 1 wobei als vinylische Comonomere ein oder mehrere Alkylacrylate eingesetzt werden.

3. Platten aus dem Sanitärmaterial nach Anspruch 1 oder 2.

4. Duschwannen aus dem Sanitärmaterial nach Anspruch 1 oder 2.

5. Badewannen aus dem Sanitärmaterial nach Anspruch 1 oder 2.

6. Himmel für Solarliegen aus dem Sanitärmaterial nach Anspruch 1 oder 2.

## Claims

1. Sanitary material resistant to hot water cycles and composed of a thermoplastic with from 1 to 15% by weight content of impact modifier, based on the rubber phase of the impact modifier,
**characterized in that**
preparation of the sanitary material uses a PMMA moulding composition composed of methyl methacrylate comprising up to 4% by weight of vinylic comonomers and having an average molar mass Mw of from 130 000 to 190 000 g/mol, and **in that** the moulding composition is processed by extrusion to give a semifinished sheet.

2. Sanitary material resistant to hot water cycles according to Claim 1, where one or more alkyl acrylates are used as vinylic comonomer.

3. Sheets composed of the sanitary material according to Claim 1 or 2.

4. Shower trays composed of the sanitary material according to Claim 1 or 2.

5. Bathtubs composed of the sanitary material according to Claim 1 or 2.

6. Sunbed roof composed of the sanitary material according to Claim 1 or 2.

## Revendications

1. Matériau sanitaire résistant aux variations d'eau chaude en un plastique thermoplastique ayant une teneur en modificateur de la résistance aux impacts comprise entre 1 et 15 % en masse, par rapport à la phase caoutchouc du modificateur de la résistance aux impacts, **caractérisé en ce qu'**un matériau de moulage PMMA de méthacrylate de méthyle ayant une composition de jusqu'à 4 % en poids de comonomères vinyliques et un poids moléculaire moyen Mw de 130 000 à 190 000 g/mol est utilisé pour la fabrication du matériau sanitaire et **en ce que** le matériau de moulage est usiné par extrusion pour former un produit semi-fini en forme de plaque.

2. Matériau sanitaire résistant aux variations d'eau chaude selon la revendication 1, dans lequel un ou plusieurs acrylates d'alkyle sont utilisés en tant que comonomères vinyliques.

3. Plaques à base du matériau sanitaire selon la revendication 1 ou 2.

4. Bacs de douche à base du matériau sanitaire selon la revendication 1 ou 2.

5. Baignoires à base du matériau sanitaire selon la revendication 1 ou 2.

6. Auvents pour chaises longues à base du matériau sanitaire selon la revendication 1 ou 2.
